# EUROPÄISCHE PATENTSCHRIFT

(11) **EP 1 190 876 B1**
(45) Veröffentlichungstag und Bekanntmachung des Hinweises auf die Patenterteilung: **15.03.2006**
(21) Anmeldenummer: 01116600.6
(22) Anmeldetag: 10.07.2001
(51) Int. Cl.: B60G 15/06, B60G 13/00, B60G 15/07, B62D 25/08

(54) **Lagerung für ein Dämpferbein**
Bearing for a shock absorber strut
Fixation pour un amortisseur

(30) Priorität: 22.09.2000 DE 10047788
(43) Veröffentlichungstag der Anmeldung: 27.03.2002
(73) Patentinhaber: Dr.Ing. h.c.F. Porsche Aktiengesellschaft, 70435 Stuttgart (DE)
(72) Erfinder: Schote, Norbert, 72119 Ammerbuch (DE); Kunert, Reinhard, 71287 Weissach (DE)

(56) Entgegenhaltungen:
- DE-A- 19 960 457
- GB-A- 616 056
- US-A- 2 251 416
- US-A- 3 437 301

## Beschreibung

Die Erfindung bezieht sich auf eine Lagerung für ein Dämpferbein einer Radaufhängung nach dem Oberbegriff des Anspruchs 1.

Aus der DE 199 60 457.6-21 ist eine Lagerung für ein Federdämpferbein oder eine Luftfeder bekannt, bei der in einer Lagerschale das Federbein gehalten ist und die Lagerschale selbst wird über radiale Lageransätze in einem Fahrzeugquerträger schwenkbar abgestützt.

Aufgabe der Erfindung ist es, eine verbesserte Verbindung der Lagerung für ein schräggestelltes Feder-Dämpferbein einer Radaufhängung in einem Fahrzeugquerträger zu schaffen.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Verwendung eines speziell gestalteten Lagers, im wesentlichen bestehend aus zwei Lagerhalbschalen, ein einfach zu montierendes Lager für eine Lagerschale an einem Fahrzeugquerträger erzielt wird. Das Lager für den Lagerbolzen besteht dabei im wesentlichen aus zwei geteilten äußeren Lagerhalbschalen, wobei die eine äußere Lagerhalbschale in einer korrespondierenden Aufnahme des Querträgers angeordnet ist und die weitere äußere Lagerhalbschale als Lagerschelle mit Befestigungsschenkeln ausgebildet ist. Hierdurch kann über diese Befestigungsschenkel eine einfache Verbindung mit dem Querträger erreicht werden.

Zur Erzielung entsprechender Radial- bzw. Axialkennungen im Lager sowie einem definierten Verdrehmoment ist das Lager zwischen den beiden äußeren Lagerhalbschalen und einer inneren Lagerhülse mit mindestens zwei elastischen Hülsen versehen, die durch mindestens eine Lagerzwischenhülse getrennt sind. Desweiteren wird in vorteilhafter Weise eine gleiche Einbaulage der Lagerschale nach Demontage und erneuter Montage ohne Verspannen der Gummilager in Torsionsrichtung erzielt. Bei der Montage erfolgt ein kalibrieren (Vorspannen) des Lagergummis.

Das Lager ist in vorteilhafter Weise mit der Lagerschelle einteilig ausgeführt und der Lagerzapfen ist fest mit der Lagerinnenhülse verbunden, so daß bei Belastung des Lagers eine elastische Bewegung des Lagerzapfens im Lager erfolgen kann und eine definiert begrenzte Bewegungsmöglichkeit der Lagerzapfen im Betrieb erzielt wird.

Ein schlitzförmiger Zwischenraum zwischen den beiden Lagerhalbschalen gewährleistet eine unbehinderte gegenseitige Bewegungsmöglichkeit der beiden Lagerhalbschalen zueinander beim gegenseitigen Verspannen bei der Montage des Lagers an den Querträger.

Ein Ausführungsbeispiel der Erfindung ist in den Zeichnungen dargestellt und wird im nachfolgenden näher beschrieben.
Es zeigen:
- Fig. 1: eine schaubildliche Ansicht auf einen Fahrzeugquerträger mit an diesem über Lager verbundener Lagerschale zur Abstützung für ein Feder-Dämpferbein,
- Fig. 2: eine Vorderansicht auf das Lager mit zwei Lagerhalbschalen wobei die eine Lagerhalbschale als Lagerschelle ausgebildet ist,
- Fig. 3: einen Schnitt nach der Linie III-III der Fig. 2 durch das Lager und
- Fig. 4: eine Draufsicht auf das Lager.

Eine Lagerung für ein Dämpferbein bzw. Federbein eines Kraftfahrzeugs umfaßt im wesentlichen eine Lagerschale 1 in welcher das Bein, welches nicht näher gezeigt ist, am Boden der Lagerschale 1 abgestützt ist. Diese ist über radial wegstehende Lagerzapfen 3, 4 mittels Lager 5, 6 in einem Fahrzeug-Querträger T schwenkbar gehalten.

Das Lager 5, 6 besteht aus zwei äußeren Lagerhalbschalen 7, 8, die über einen schlitzartigen Zwischenraum 9, 10 an jeder Seite voneinander getrennt sind.

Die eine Lagerhalbschale 7 ist in einer mit dieser korrespondierenden Aufnahme 11 im Querträger T angeordnet, wobei die weitere Lagerhalbschale 8 als sogenannte Lagerschelle L mit wegragenden Befestigungsschenkeln 12, 13 ausgeführt ist.

Das Lager 5, 6 weist zwischen den beiden Lagerhalbschalen 7, 8 und einer inneren Lagerhülse 14 mindestens zwei elastische Hülsen 15, 16 und mindestens eine Lagerzwischenhülse 17 auf. Diese Lagerelemente 7, 8, 14, 15, 16 und 17 bilden ein einteiliges Lager 5, 6.

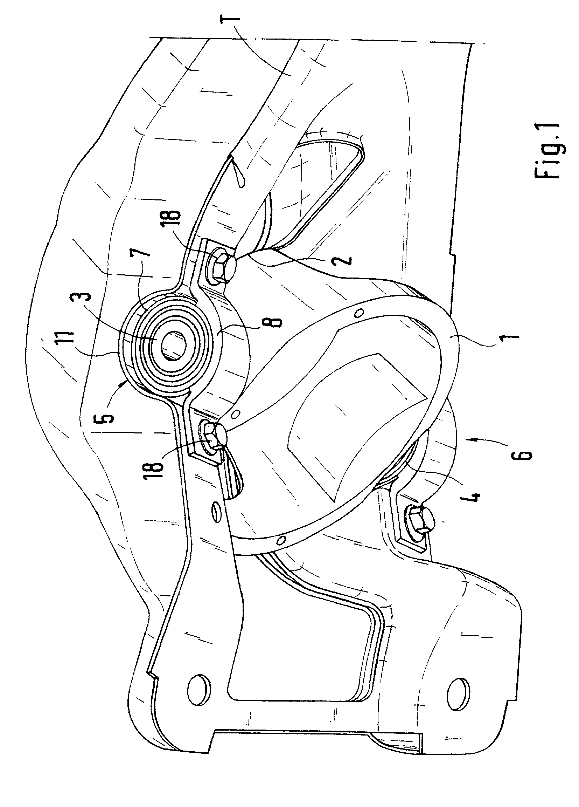

Im Einbauzustand gemäß Fig. 1 wird die Lagerschelle L, welche durch eine Lagerhalbschale 8 gebildet wird, über Schrauben 18, die die Befestigungsschenkel 12, 13 durchdringen, am Fahrzeugquerträger T befestigt, wodurch eine definierte Positionierung der Lager 5, 6 erzielt wird. Ein Verspannen der Lager 5, 6 in Torsionsrichtung ist somit ausgeschlossen.

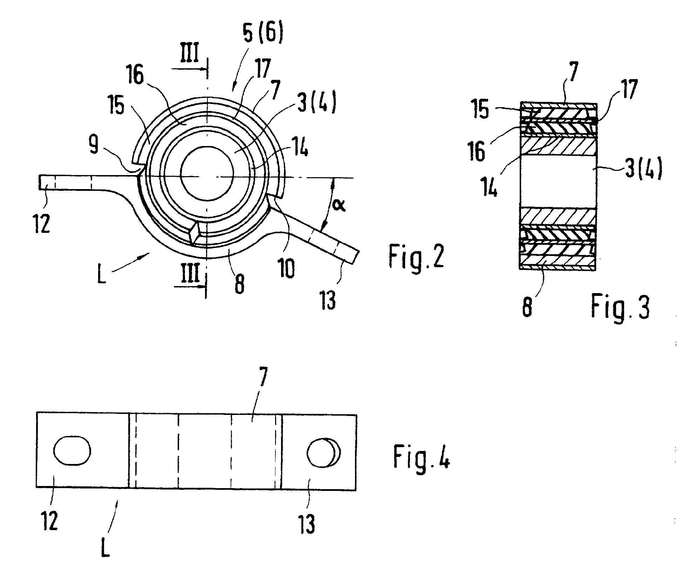

Einer der Befestigungsschenkel 12 oder 13 oder auch beide Befestigungsschenkel 12, 13 der Lagerhalbschale 8 können beispielsweise wie in Fig. 2 gezeigt, auch unter einem Winkel α zur horizontalen Ebene X-X angestellt sein, so daß die Lagerschale 1 nicht nur an in einer Ebene angeordneten Flächen des Querträgers T anschraubbar ist.

## Patentansprüche

1. Lagerung für ein schräggestelltes Feder-Dämpferbein einer Radaufhängung im Aufbau eines Kraftfahrzeugs über Lager (5,6), die an einem als Lagerschale (1) ausgebildeten Lagerelement angeordnet sind wobei das Feder-Dämpferbein in dieser Lagerschale (1) abgestützt ist und die Lager (5,6) der Lagerschale auf zwei auf einer gemeinsamen Schwenkachse liegenden Lagerbolzen (3,4) montiert sind und die Lagerschale (1) über diese schwenkbeweglich in einem Querträger (T) des Fahrzeugaufbaus abgestützt ist, **dadurch gekennzeichnet, daß** die Lagerbolzen (3, 4) jeweils über ein zweigeteiltes Lager (5, 6) mit äußeren Lagerhalbschalen (7, 8) im Querträger (T) gehalten sind, wobei die eine äußere Lagerhalbschale (7) in einer korrespondierenden Aufnahme (11) des Querträgers (T) angeordnet ist und die weitere äußere Lagerhalbschale (8) als Lagerschelle (L) mit Befestigungsschenkeln (12, 13) ausgebildet ist.

2. Lagerung nach Anspruch 1, **dadurch gekennzeichnet, daß** das Lager (5, 6) zwischen den beiden äußeren Lagerhalbschalen (7, 8) und einer inneren Lagerhülse (14) mindestens zwei elastische Hülsen (15, 16) aufweist, die durch mindestens eine Lagerzwischenhülse (17) getrennt sind.

3. Lagerung nach den Ansprüchen 1 oder 2, **dadurch gekennzeichnet, daß** das Lager (5, 6) mit den Lagerhalbschalen (7, 8), den elastischen Hülsen (15, 16) und der Lagerzwischenhülse (17) ein einteiliges Lager-Bauteil bildet.

4. Lagerung nach den Ansprüchen 1, 2 oder 3, **dadurch gekennzeichnet, daß** zwischen der im Querträger (T) angeordneten einen Lagerhalbschale (7) und der außenliegenden weiteren Lagerhalbschale (8) ein schlitzförmiger Zwischenraum (9, 10) vorgesehen ist.

5. Lagerung nach den Ansprüchen 1, 2, 3 oder 4, **dadurch gekennzeichnet, daß** das Lager bei der Montage derart radial vorgespannt wird, daß eine hohe Radialsteifigkeit bei geringer Torsionssteifigkeit erzielbar ist.

## Claims

1. A mounting for an inclined suspension strut of a wheel suspension in the body of a motor vehicle by way of bearings (5, 6) which are arranged on a bearing element constructed in the form of a bearing shell (1), wherein the suspension strut is supported in the said bearing shell (1) and the bearings (5, 6) of the bearing shell are mounted on two bearing pins (3, 4) which are situated on a common pivot axis, and the bearing shell (1) is supported in a transverse support member (T) of the vehicle body so as to be pivotably movable by way of the said bearing pins (3, 4), **characterized in that** the bearing pins (3, 4) are held in each case in the transverse support member (T) by way of a bearing (5, 6) divided into two and with outer half-shells (7, 8), wherein one outer half-shell (7) of the bearing is arranged in a corresponding receiving means (11) of the transverse support member (T) and the further outer half-shell (8) of the bearing is constructed in the form of a bearing clamp (L) with fastening arms (12, 13).

2. A mounting according to Claim 1, **characterized in that** between its two outer half-shells (7, 8) and an inner bearing sleeve (14) the bearing (5, 6) has at least two resilient sleeves (15, 16) which are separated by at least one intermediate sleeve (17) of the bearing.

3. A mounting according to Claims 1 or 2, **characterized in that** the bearing (5, 6) forms a one-piece bearing component with the half-shells (7, 8) of the bearing, the resilient sleeves (15, 16) and the intermediate sleeve (17) of the bearing.

4. A mounting according to Claims 1, 2 or 3, **characterized in that** a slot-shaped interspace (9, 10) is provided between one half-shell (7) of the bearing arranged in the transverse support member (T) and the further half-shell (8) of the bearing situated on the outside.

5. A mounting according to Claims 1, 2, 3 or 4, **characterized in that** during the assembly the bearing is pre-stressed radially in such a way that a high degree of radial rigidity is achievable at the same time as a low degree of torsional rigidity.

## Revendications

1. Logement pour une jambe de force d'amortisseur à ressort inclinée d'une suspension de roue dans la carrosserie d'un véhicule automobile par l'intermédiaire de logements (5, 6), qui sont disposés sur un élément de palier réalisé sous forme de coquille de palier (1), la jambe de force d'amortisseur à ressort s'appuyant dans cette coquille de palier (1) et les logements (5, 6) de la coquille de palier étant montés sur deux tourillons de palier (3, 4) se trouvant sur un axe de pivotement commun et la coquille de palier (1) s'appuyant avec mouvement pivotant dans une traverse (T) de la carrosserie du véhicule par l'intermédiaire de ceux-ci, **caractérisé en ce que** les tourillons de palier (3, 4) sont maintenus à chaque fois dans la traverse (T) par l'intermédiaire d'un palier en deux parties (5, 6) avec des demi-coquilles de palier extérieures (7, 8), la première demi-coquille de palier extérieure (7) étant disposée dans un logement (11) correspondant de la traverse (T) et l'autre demi-coquille de palier extérieure (8) étant réalisée sous forme de bride de palier (L) avec branches de fixation (12, 13).

2. Logement selon la revendication 1, **caractérisé en ce que** le palier (5, 6) présente, entre les deux demi-coquilles de palier extérieures (7, 8) et une douille intérieure (14), au moins deux douilles élastiques (15, 16), qui sont séparées par au moins une douille intermédiaire (17).

3. Logement selon l'une quelconque des revendications 1 ou 2, **caractérisé en ce que** le palier (5, 6) forme avec les demi-coquilles de palier (7, 8), les douilles élastiques (15, 16) et la douille intermédiaire (17) un composant de palier d'une seule pièce.

4. Logement selon l'une quelconque des revendications 1, 2 ou 3, **caractérisé en ce qu'**un interstice (9, 10) en forme de fente est prévu entre la première demi-coquille de palier (7) disposée dans la traverse (T) et l'autre demi-coquille de palier extérieure (8).

5. Logement selon l'une quelconque des revendications 1, 2, 3 ou 4, **caractérisé en ce que** le palier est précontraint radialement lors du montage de telle manière qu'une rigidité radiale élevée peut être obtenue pour une rigidité à la torsion réduite.
